# EUROPEAN PATENT APPLICATION

(11) **EP 4 513 663 A1**
(43) Date of publication of application: **26.02.2025**
(21) Application number: 23903846.6
(22) Date of filing: 30.11.2023
(51) Int. Cl.: H01M 50/59, H01M 50/586, H01M 50/178, H01M 50/211

(54) **BATTERY CELL INCLUDING INSULATING FILM HAVING FUNCTION OF PREVENTING SHORT CIRCUIT DUE TO CONDENSATION AND BATTERY MODULE COMPRISING SAME**

(30) Priority: 16.12.2022 KR 20220177032
(71) Applicant: LG Energy Solution, Ltd., Seoul 07335 (KR)
(72) Inventor: BAEK, Doo Hyun, Daejeon 34122 (KR); KANG, In Woo, Daejeon 34122 (KR); LEE, Hyun Ju, Daejeon 34122 (KR); CHO, Seung Su, Daejeon 34122 (KR)
(74) Representative: Goddar, Heinz J.
(86) International application number: PCT/KR2023/019621
(87) International publication number: WO 2024/128643

(57) **Abstract**

Disclosed are a battery cell having an insulating film having a function of preventing short circuit due to condensation and a battery module including the same, and more particularly a battery cell having an insulating film having a function of preventing short circuit due to condensation, the battery cell including a pouch case, an electrode assembly received in the pouch case, the electrode assembly including a negative electrode, a positive electrode, and a separator interposed between the negative electrode and the positive electrode, a pair of electrode leads including a negative electrode lead and a positive electrode lead, and a pair of insulating films including a negative electrode insulating film interposed between an inner surface of a sealed portion of the pouch case and the negative electrode lead and including a positive electrode insulating film interposed between the inner surface of the sealed portion of the pouch case and the positive electrode lead, wherein the negative electrode insulating film and/or the positive electrode insulating film has a non-overlap portion exposed outside the sealed portion of the pouch case, and the non-overlap portion includes a flow channel configured to allow condensation to move therethrough, and a battery module including the same.

## Description

### [Technical Field]

This application claims the benefit of priority to Korean Patent Application No. 2022-0177032 filed on December 16, 2022, the disclosure of which is incorporated herein by reference in its entirety.

The present invention relates to a battery cell having an insulating film having a function of preventing short circuit due to condensation and a battery module including the same, and more particularly to a battery cell having an insulating film having a function of preventing short circuit due to condensation configured such that a flow channel, a water-repellent coating layer, or a blocking band is formed at an insulating film provided between a pouch case and an electrode lead, whereby it is possible to significantly reduce a possibility of short circuit due to condensation, and a battery module including the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of lithium secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, condensation may be generated in a battery module or a battery pack due to the difference in temperature between the inside and the outside thereof during use. Condensation is a phenomenon in which, when the temperature of moisture-containing air drops to a dew point or lower, the moisture contained in the air forms droplets on the surface of an object, and such condensation is mainly generated when the temperature in a secondary battery is lower than ambient temperature.

The condensation thus generated may cause the secondary cell to operate abnormally. For example, when condensation is generated in a pouch-shaped battery cell, electrical short circuit occurs due to capillary action between a pouch case including a metal layer and an electrode lead, which may shorten the lifespan of the battery cell or may lead to a fire.

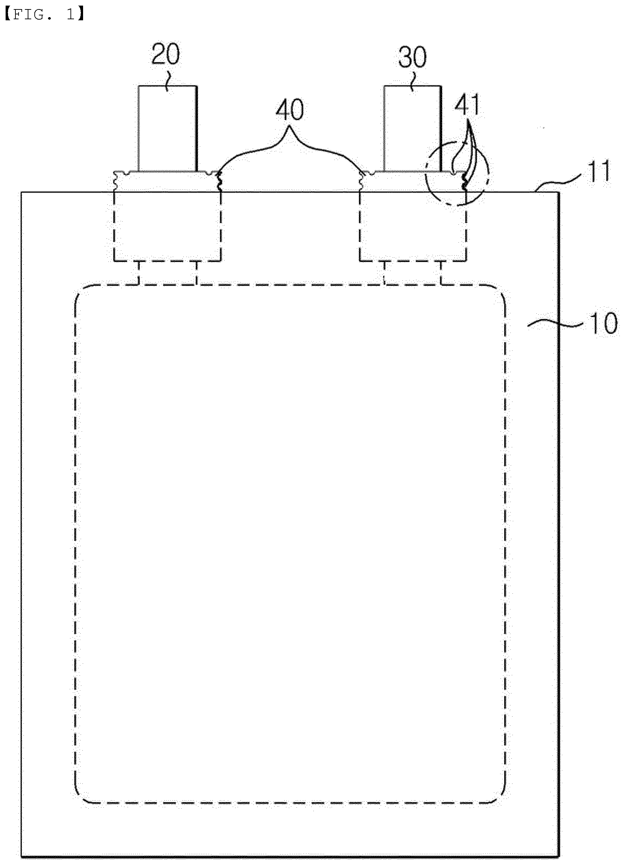

In this regard, a secondary battery having an insulating film configured to prevent condensation flow is disclosed in Prior Art Document 1. As shown in FIG. 1, which is a plan view of a battery cell having an insulating film configured to prevent condensation flow, the insulating film 40 is exposed outside a junction interface 11 between electrode leads 20 and 30 and a pouch sheath 10, and a concave recess 41 configured to prevent short circuit due to condensation is formed in a side surface and an upper surface of the part of the insulating film that does not overlap the electrode leads 20 and 30.

When an insulating film having a concave recess formed therein is used, as in Prior Art Document 1, it is possible to prevent a certain level of short circuit; however, the risk of short circuit due to condensation is still high since the concave recess is formed in only a part of an edge of the insulating film.

In particular, when the battery cell is assembled vertically into a battery module or a battery pack, generated condensation may easily move to the electrode leads.

### (Prior Art Document)

(Prior Art Document 1) Korean Patent Application Publication No. 2013-0036991

### [Disclosure]

### [Technical Problem]

The present invention has been made in view of the above problems, and it is an object of the present invention to provide a battery cell having an insulating film having a function of preventing short circuit due to condensation capable of reliably preventing condensation generated outside a battery cell case from moving to an electrode lead and a battery module including the same.

### [Technical Solution]

A battery cell according to the present invention to accomplish the above object includes a pouch case (100) made of a laminate sheet, the pouch case having a receiving space; an electrode assembly (200) received in the pouch case (100), the electrode assembly including a negative electrode (210) having a negative electrode tab (211), a positive electrode (220) having a positive electrode tab (221), and a separator (230) interposed between the negative electrode (210) and the positive electrode (220); a pair of electrode leads (300) including a negative electrode lead (310) electrically connected to the negative electrode tab (211) and a positive electrode lead (320) electrically connected to the positive electrode tab (221); and a pair of insulating films (400) including a negative electrode insulating film (410) interposed between an inner surface of a sealed portion of the pouch case (100) and the negative electrode lead (310) and including a positive electrode insulating film (420) interposed between the inner surface of the sealed portion of the pouch case (100) and the positive electrode lead (320), wherein the negative electrode insulating film (410) and/or the positive electrode insulating film (420) has a non-overlap portion exposed outside the sealed portion of the pouch case (100), and the non-overlap portion includes a flow channel configured to allow condensation to move therethrough.

Also, in the battery cell according to the present invention, a negative electrode non-overlap portion (412) of the negative electrode insulating film (410) may include a first flow channel (412a) configured to allow condensation to move therethrough in a direction orthogonal to the negative electrode lead (310), and a positive electrode non-overlap portion (422) of the positive electrode insulating film (420) may include a third flow channel (422a) configured to allow condensation to move therethrough in a direction orthogonal to the positive electrode lead (320).

Also, in the battery cell according to the present invention, the sectional shape of each of the first flow channel (412a) and the third flow channel (422a) may be hemispherical, triangular, or quadrangular, and opposite ends of each of the first flow channel and the third flow channel may be open.

Also, in the battery cell according to the present invention, the negative electrode non-overlap portion (412) may further include a second flow channel (412b) parallel to and spaced apart from the first flow channel (412a) by a predetermined distance.

In addition, the first flow channel (412a) and the second flow channel (412b) may have different sectional areas.

Also, in the battery cell according to the present invention, the positive electrode non-overlap portion (422) may further include a fourth flow channel (422b) parallel to and spaced apart from the third flow channel (422a) by a predetermined distance.

Also, in the battery cell according to the present invention, the third flow channel (422a) and the fourth flow channel (422b) may have different sectional areas.

Also, in the battery cell according to the present invention, the negative electrode non-overlap portion (412) may have a first water-repellent coating layer (412c) formed so as not to overlap the first flow channel (412a), and the positive electrode non-overlap portion (422) may have a second water-repellent coating layer (422c) formed so as not to overlap the third flow channel (422a).

Also, in the battery cell according to the present invention, the first water-repellent coating layer (412c) may be positioned along an edge in the direction orthogonal to the negative electrode lead (310), and the second water-repellent coating layer (422c) is positioned along an edge in the direction orthogonal to the positive electrode lead (320).

Also, in the battery cell according to the present invention, the negative electrode non-overlap portion (412) may have a first blocking band (412d) positioned along an edge in the direction orthogonal to the negative electrode lead (310).

Also, in the battery cell according to the present invention, the positive electrode non-overlap portion (422) may have a second blocking band (422d) positioned along an edge in the direction orthogonal to the positive electrode lead (320).

In addition, the present invention provides a battery module including the battery cell.

In addition, a battery cell manufacturing method according to the present invention includes a first step of preparing a pouch case (100) having a receiving space configured to receive an electrode assembly (200); a second step of attaching a negative electrode insulating film (410) and a positive electrode insulating film (420) to a negative electrode lead (310) and a positive electrode lead (320) electrically connected to the electrode assembly (200), respectively; and a third step of receiving the electrode assembly (200) in the receiving space of the pouch case (100) and sealing an edge of the pouch case (100), wherein the negative electrode insulating film (410) and/or the positive electrode insulating film (420) includes a non-overlap portion exposed outside a sealed portion of the pouch case (100), the negative electrode non-overlap portion (412) of the negative electrode insulating film (410) includes a first flow channel (412a) configured to allow condensation to move therethrough in a direction orthogonal to the negative electrode lead (310), and the positive electrode non-overlap portion (422) of the positive electrode insulating film (420) includes a third flow channel (422a) configured to allow condensation to move therethrough in a direction orthogonal to the positive electrode lead (320).

### [Advantageous Effects]

As is apparent from the above description, a battery cell having an insulating film having a function of preventing short circuit due to condensation according to the present invention and a battery module including the same has the merit that a non-overlap portion of an insulating film exposed outside a pouch case is provided with a flow channel configured to allow condensation to move therethrough in a direction orthogonal to an electrode lead, whereby it is possible to greatly reduce the possibility of short circuit due to condensation.

In addition, the battery cell having the insulating film having the function of preventing short circuit due to condensation according to the present invention and the battery module including the same has the advantage that a water-repellent coating layer is formed on the non-overlap portion of the insulating film exposed outside the pouch case, whereby it is possible to greatly reduce the possibility of short circuit due to condensation.

Furthermore, the battery cell having the insulating film having the function of preventing short circuit due to condensation according to the present invention and the battery module including the same has the merit that the non-overlap portion of the insulating film exposed outside the pouch case is provided with a blocking band, whereby it is possible to greatly reduce the possibility of short circuit due to condensation.

### [Description of Drawings]

FIG. 1 is a plan view of a battery cell having a conventional insulating film configured to prevent condensation flow.
FIG. 2 is an exploded perspective view of a battery cell according to a first preferred embodiment of the present invention.
FIG. 3 is a plan view showing the state in which an insulating film is seated on an electrode lead of an electrode assembly shown in FIG. 2.
FIG. 4 is a sectional view taken along line A-A of FIG. 3.
FIG. 5 is a plan view showing the state in which an insulating film is seated on an electrode lead of an electrode assembly according to a second preferred embodiment of the present invention.
FIG. 6 is a sectional view taken along line B-B of FIG. 5.
FIG. 7 is a plan view showing the state in which an insulating film is seated on an electrode lead of an electrode assembly according to a third preferred embodiment of the present invention.
FIG. 8 is a sectional view taken along line C-C of FIG. 7.
FIG. 9 is a plan view showing the state in which an insulating film is seated on an electrode lead of an electrode assembly according to a fourth preferred embodiment of the present invention.
FIG. 10 is a sectional view taken along line D-D of FIG. 9.
FIG. 11 is a perspective view of a battery module in which a battery cell according to the present invention is received.
FIG. 12 is a flowchart illustrating a battery cell manufacturing method according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery cell having an insulating film having a function of preventing short circuit due to condensation according to the present invention and a battery module including the same will be described with reference to the accompanying drawings.

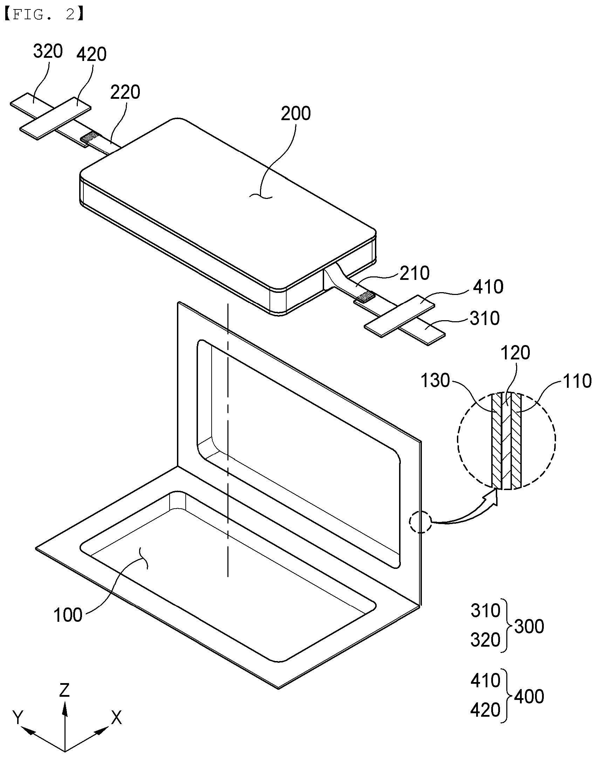

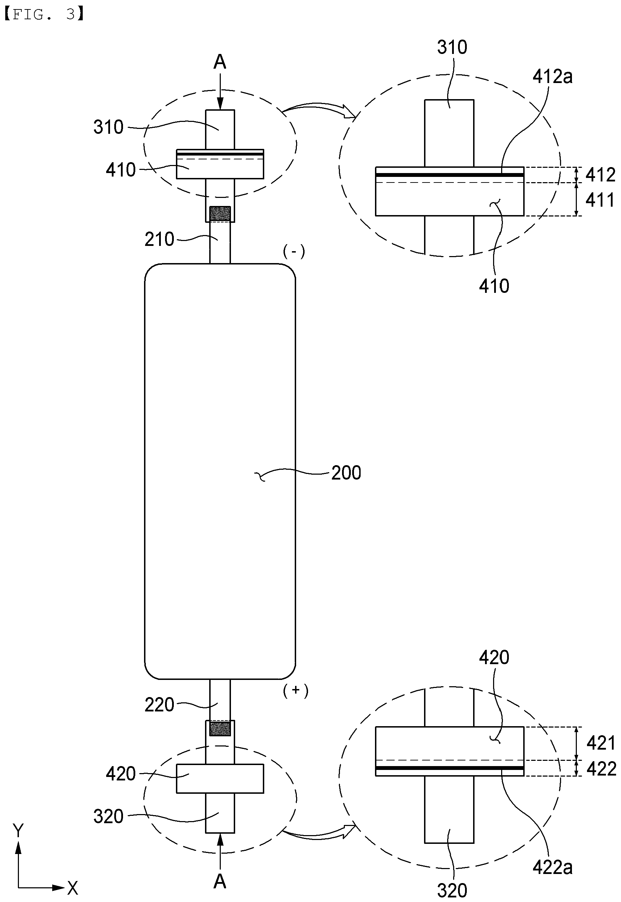

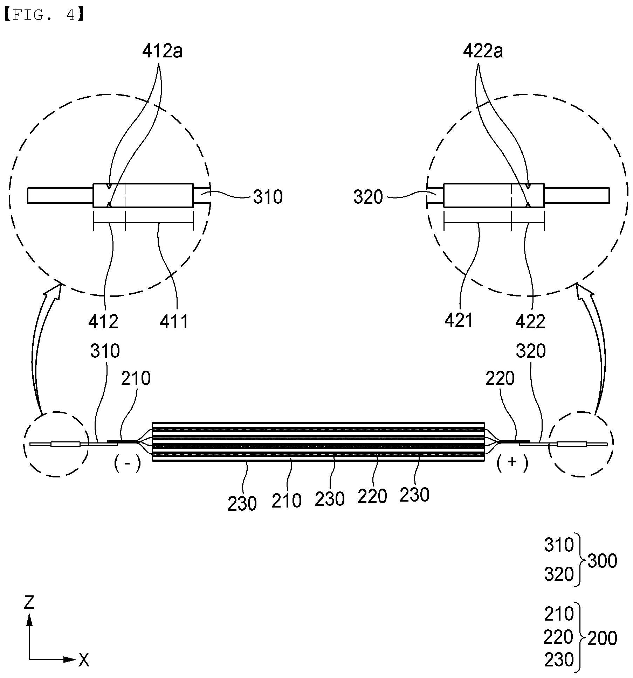

FIG. 2 is an exploded perspective view of a battery cell according to a first preferred embodiment of the present invention, FIG. 3 is a plan view showing the state in which an insulating film is seated on an electrode lead of an electrode assembly shown in FIG. 2, and FIG. 4 is a sectional view taken along line A-A of FIG. 3.

As shown in FIGs. 2 to 4, the battery cell according to the present invention includes a pouch case 100, an electrode assembly 200, an electrode lead 300, and an insulating film 400.

First, the pouch case 100 may be constituted by a lower case and an upper case, and a pocket-shaped receiving space configured to receive the electrode assembly 200 is formed in the pouch case.

The pouch case 100 is made of a laminate sheet including an outer resin layer 110, a metal layer 120, and an inner resin layer 130 in order to form a receiving portion therein.

Specifically, the outer resin layer 110, which is located at the outermost side of the pouch case 100, may be made of a heat-resistant polymer that exhibits excellent tensile strength, resistance to moisture permeation, and resistance to air transmission in order to secure heat resistance and chemical resistance while protecting the electrode assembly 200. As an example, the outer resin layer may be made of nylon or polyethylene terephthalate; however, the present invention is not limited thereto.

The metal layer 120, which is located between the outer resin layer 110 and the inner resin layer 130, corresponds to a barrier layer configured to prevent moisture or various kinds of gas from permeating into a battery. An aluminum thin film, which is lightweight and easily shapeable, may be used as a preferred material for the metal layer 120.

The inner resin layer 130, which is located at the innermost side of the pouch case 100, is disposed in direct contact with the electrode assembly 200, and therefore the inner resin layer must exhibit high insulation properties and high resistance to an electrolytic solution. In addition, the inner resin layer must exhibit high sealability in order to hermetically seal the pouch case from the outside, i.e., a thermally-bonded sealed portion between the inner resin layers must exhibit excellent thermal bonding strength.

The inner resin layer 130 may be made of a material selected from among a polyolefin-based resin, such as polypropylene, polyethylene, polyethylene acrylate, or polybutylene, a polyurethane resin, and a polyimide resin, which exhibit excellent chemical resistance and high sealability. However, the present invention is not limited thereto, and polypropylene, which exhibits excellent mechanical properties, such as tensile strength, rigidity, surface hardness, and impact resistance, and excellent chemical resistance, is the most preferably used.

Although the receiving space is shown as being provided in each of the upper case and the lower case in FIG. 2, the receiving space may be provided in only one of the upper case and the lower case.

Next, the electrode assembly 200 will be described. The electrode assembly 200, which is seated in the receiving space of the pouch case 100, may be a jelly-roll type electrode assembly, which is configured to have a structure in which a long sheet type negative electrode 210 and a long sheet type positive electrode 220 are wound in the state in which a separator 230 is interposed therebetween, a stacked type electrode assembly including unit cells, each of which is configured to have a structure in which a rectangular negative electrode 210 and a rectangular positive electrode 220 are stacked in the state in which a separator 230 is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

Specifically, the negative electrode 210 is manufactured by applying a slurry mixture of a negative electrode active material and a binder to a negative electrode current collector.

As the negative electrode active material, for example, there may be used carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof; however, the present invention is not limited thereto.

The positive electrode 220 is manufactured by applying a slurry mixture of a positive electrode active material and a binder to a positive electrode current collector.

The positive electrode active material may be constituted, for example, by a layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, LiFe₃O₄, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃; however, the present invention is not limited thereto.

Meanwhile, each of the negative electrode current collector and the positive electrode current collector is constituted by a portion to which the slurry including the active material is applied and an uncoated portion to which no slurry is applied. The uncoated portion is cut or a separate conductive member is connected to the uncoated portion by ultrasonic welding to form a pair of electrode tabs, i.e., a negative electrode tab 221 and a positive electrode tab 231.

A thin insulating film having high ionic permeability and mechanical strength is used as the separator 230, which is interposed between the negative electrode 210 and the positive electrode 220 or is provided outside the negative electrode 210. The pore diameter of the separator 230 is generally 0.01 µm to 10 µm, and the thickness of the separator is generally 5 µm to 300 µm. A sheet or nonwoven fabric made of, for example, an olefin-based polymer, which is chemically resistant and hydrophobic, such as polypropylene, fiberglass, or polyethylene, may be used as the separator 230; however, the present invention is not limited thereto.

A negative electrode lead 310 and a positive electrode lead 320, which constitute a pair of electrode leads 300, are electrically connected to the negative electrode tab 211 and the positive electrode tab 221, respectively, and are exposed outside the pouch case 100.

Here, the pair of electrode leads 300 and the pair of electrode tabs may be electrically connected to each other by welding, e.g., ultrasonic welding. Connection by ultrasonic welding is performed according to the principle by which high-frequency vibration generated by an ultrasonic wave of about 20 kHz is applied and vibration energy is converted into thermal energy due to friction at the interface between the electrode tab and the electrode lead as the result of operation of a horn and an anvil, whereby welding is rapidly performed. Of course, welding is not limited to ultrasonic welding as long as a tap bundle and a lead can be electrically connected to each other by welding.

Although not shown in the figures, a protective tape (not shown) may be provided at the part at which the electrode tab and the electrode lead overlap each other so as to wrap the overlap part.

Since the electrode tab and the electrode lead are connected to each other by welding, surfaces of the electrode tab and the electrode lead may not be smooth, which leads to poor insulation.

In other words, if the surface of a weld is not smooth, when the weld and the pouch case come into contact with each other due to impact, the inner resin layer is peeled off, whereby the metal layer is exposed, resulting in poor insulation. Consequently, it is preferable to wrap the weld using the protective tape in order to prevent poor insulation.

Here, the protective tape may be made of an insulative material. As an example, the protective tape may be made of polypropylene, polyethylene, polyester, or polyimide. However, the present invention is not limited thereto as long as the material is capable of wrapping the weld and remaining insulated when in contact with the pouch case.

Next, the insulating film 400 will be described. The insulating film 400 is provided at the sealed portion of the pouch case 100, i.e., at the position at which an edge of the pouch case 100 that is sealed for sealing and the electrode lead 300 overlap each other. The reason for this is that the insulating film 400 can maintain sealing of the pouch case 100 while preventing electricity generated by the electrode assembly 200 from flowing to the pouch case 100 via the electrode lead 300.

Specifically, in order to prevent direct contact between the pouch case 100 and the negative electrode lead 310, a negative electrode insulating film 410 includes a negative electrode overlap portion 411 located at the part at which the negative electrode lead 310 and the sealed portion of the pouch case 100 overlap each other and a negative electrode non-overlap portion 412 exposed outside the sealed portion of the pouch case 100.

Also, in order to prevent direct contact between the pouch case 100 and the positive electrode lead 320, a positive electrode insulating film 420 may include a positive electrode overlap portion 421 located at the part at which the positive electrode lead 320 and the sealed portion of the pouch case 100 overlap each other and a positive electrode non-overlap portion 412 exposed outside the sealed portion of the pouch case 100.

In this case, it is preferable for the negative electrode non-overlap portion 412 or the positive electrode non-overlap portion 412 to be provided with a flow channel configured to guide condensation flow in a desired direction, and it is more preferable for the negative electrode non-overlap portion 412 to be provided with a first flow channel 412a and for the positive electrode non-overlap portion 422 to be provided with a third flow channel 422a.

Here, the first flow channel 412a of the negative electrode non-overlap portion 412 is formed in a direction orthogonal to the negative electrode lead 310, and the third flow channel 422a of the positive electrode non-overlap portion 422 is formed in a direction orthogonal to the positive electrode lead 320, in order to guide downward flow of condensation along the flow channels while inhibiting movement of condensation in a direction toward the lead when the battery cell is mounted in a vertical direction.

In the present invention, the flow channel corresponds to a long passageway configured such that generated condensation is directly introduced into the flow channel and moves therethrough or the movement of condensation is guided by capillary action. Consequently, the sectional shape of each of the first flow channel 412a and the third flow channel 422a is not particularly restricted as long as the flow direction of condensation can be determined. For example, the sectional shape of the flow channel may be hemispherical, triangular, or quadrangular, and the width and depth of the flow channel may be tens of nanometers (nm) to several micrometers (µm).

It is preferable for opposite ends of each of the first flow channel 412a and the third flow channel 422a to be open such that generated condensation is introduced into the first flow channel 412a and the third flow channel 422a and is then discharged from the first flow channel and the third flow channel or flows in contact with the flow channels.

It is preferable for the lead film 400 to be made of a non-conductive material that does not conduct electricity well, and an insulating tape that is easily attached to the electrode lead and has a relatively small thickness is generally used; however, the present invention is not limited thereto.

Specifically, the lead film may be made of at least one material selected from the group consisting of polyimide (PI), polypropylene (PP), polyethylene (PE), polyethylene terephthalate (PET), polyvinyl chloride (PVC), high density polyethylene (HDPE), and an epoxy resin, and is bonded to the inner resin layer of the pouch case by thermal fusion using heat and pressure.

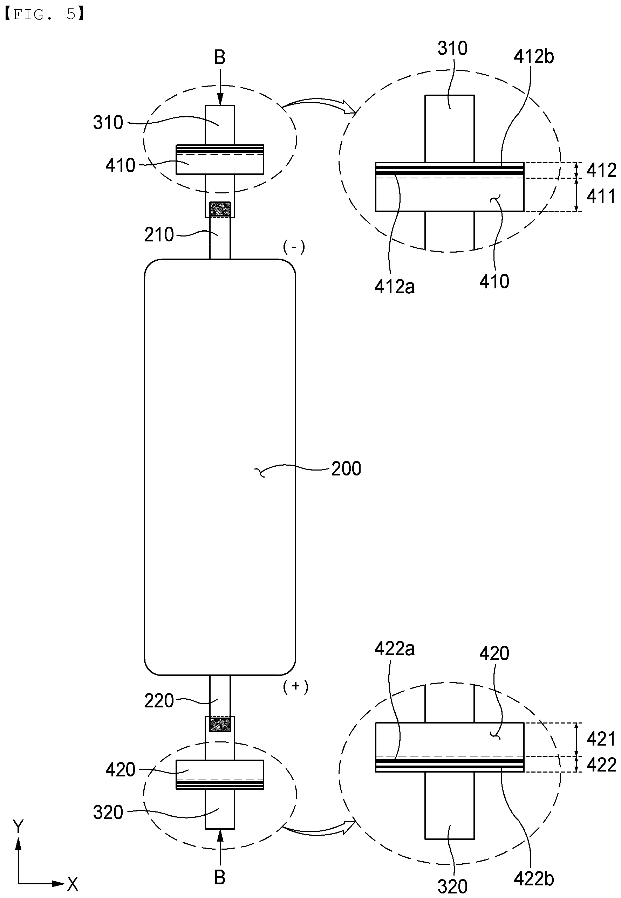

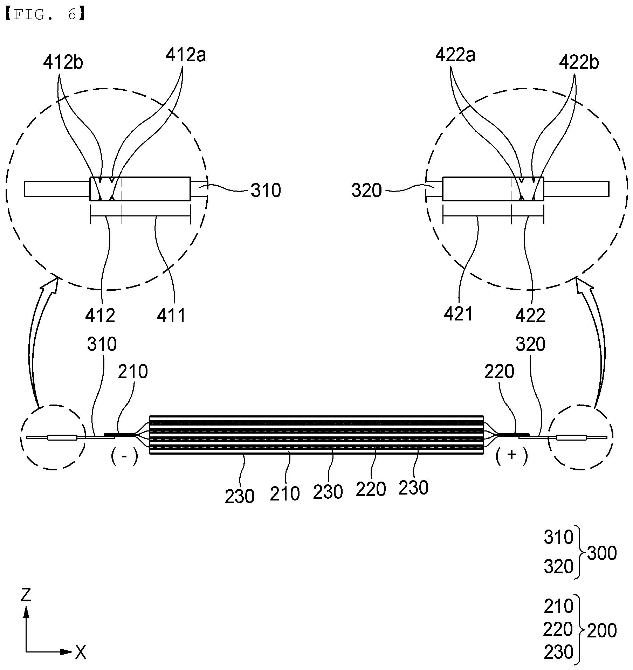

FIG. 5 is a plan view showing the state in which an insulating film is seated on an electrode lead of an electrode assembly according to a second preferred embodiment of the present invention, and FIG. 6 is a sectional view taken along line B-B of FIG. 5.

The second embodiment is identical to the first embodiment except for the insulating film, and therefore only the insulating film will be hereinafter described.

In the second embodiment of the present invention, a plurality of flow channels is formed in each of a negative electrode non-overlap portion 412 and a positive electrode non-overlap portion 422.

The case in which two flow channels are provided will be described by way of example. A negative electrode non-overlap portion 412 of a negative electrode insulating film 410 is provided with a first flow channel 412a and a second flow channel 412b. In this case, it is preferable for the first flow channel 412a and the second flow channel 412b to be spaced apart from each other in parallel by a predetermined distance, and it is more preferable for the sectional area of the first flow channel 412a, which is located relatively inwardly, to be greater than the sectional area of the second flow channel 412b, which is located at the edge, in order to minimize the movement of condensation to a negative electrode lead 310.

In addition, a positive electrode non-overlap portion 422 of a positive electrode insulating film 420 is provided with a third flow channel 422a and a fourth flow channel 422b, and the positions and sectional areas thereof are the same as those of the first flow channel 412a and the second flow channel 412b of the negative electrode non-overlap portion 412, and therefore a duplicate description will be omitted.

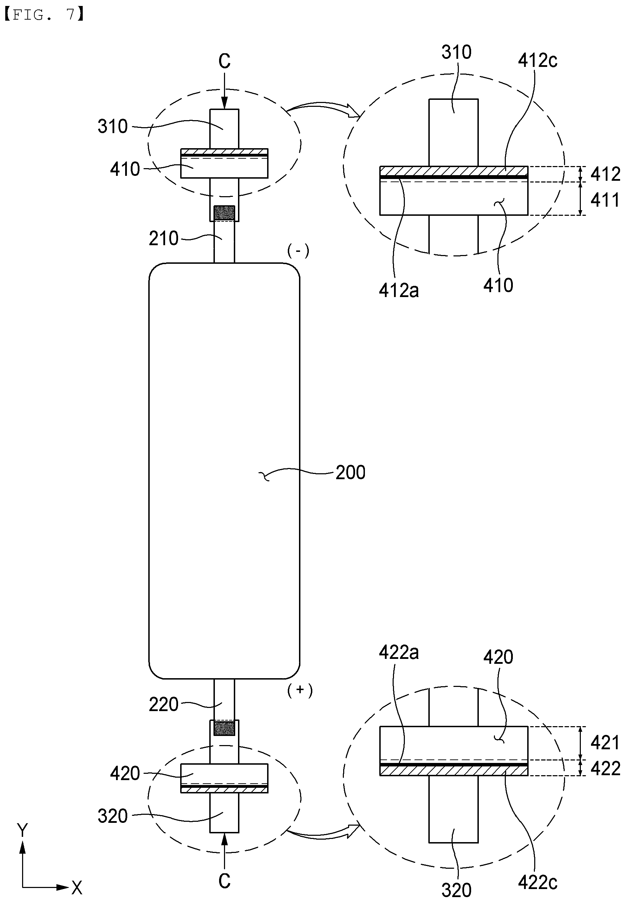

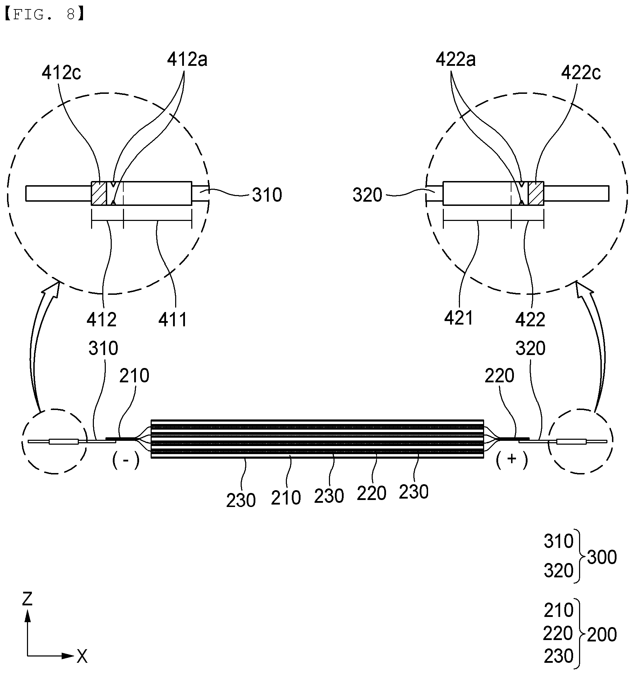

FIG. 7 is a plan view showing the state in which an insulating film is seated on an electrode lead of an electrode assembly according to a third preferred embodiment of the present invention, and FIG. 8 is a sectional view taken along line C-C of FIG. 7.

The third embodiment is identical to the first embodiment except for the insulating film, and therefore only the insulating film will hereinafter be described.

In the third embodiment of the present invention, a water-repellent coating layer is further formed on each of a negative electrode non-overlap portion 412 and a positive electrode non-overlap portion 422.

Specifically, it is preferable for the negative electrode non-overlap portion 412 to be provided with a first water-repellent coating layer 412c formed so as not to overlap a first flow channel 412a, and it is more preferable for the first water-repellent coating layer 412c to be provided along an edge in a direction orthogonal to a negative electrode lead 310.

When the first water-repellent coating layer 412c is formed on the negative electrode non-overlap portion 412, as described above, it is possible to more reliably prevent condensation from flowing to the negative electrode lead 310.

Similarly, it is preferable for the positive electrode non-overlap portion 422 to be provided with a second water-repellent coating layer 422c formed so as not to overlap a third flow channel 422a, and it is more preferable for the second water-repellent coating layer 422c to be provided along an edge in a direction orthogonal to a positive electrode lead 320.

Here, a known water-repellent material, such as a fluorine-based compound or a silane-based compound, may be used as a water-repellent coating material, and the coating layer may be formed using a dip coating method or a spray coating method.

Although the case in which a water-repellent coating layer is formed on a non-overlap portion having a single flow channel has been described in the third embodiment, a water-repellent coating layer may also be formed on a non-overlap portion having two or more flow channels, as in the second embodiment.

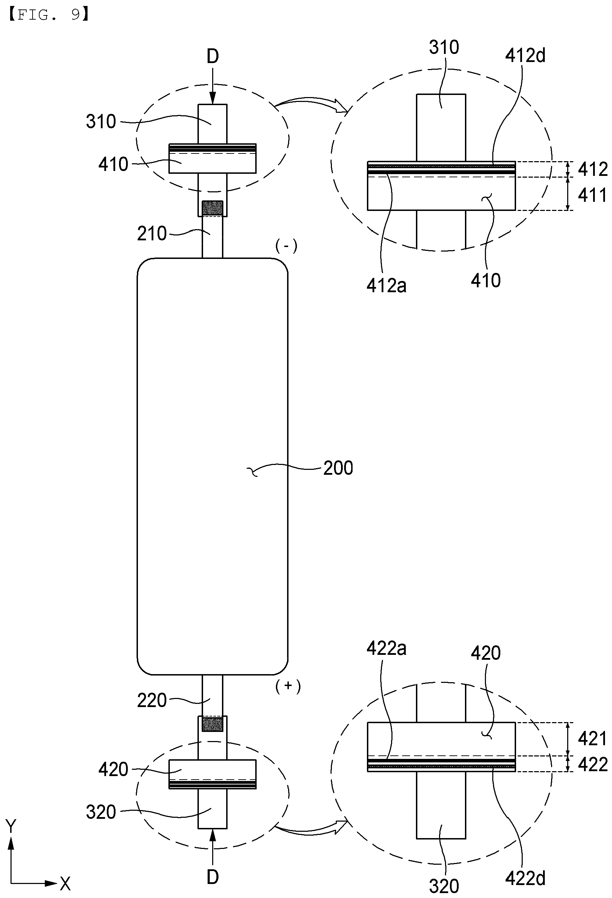

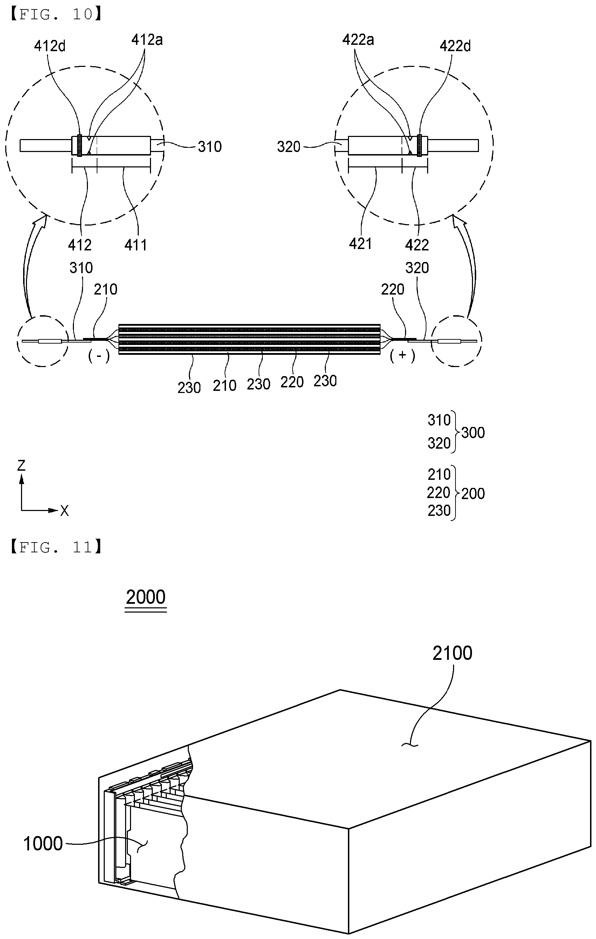

FIG. 9 is a plan view showing the state in which an insulating film is seated on an electrode lead of an electrode assembly according to a fourth preferred embodiment of the present invention, and FIG. 10 is a sectional view taken along line D-D of FIG. 9.

The fourth embodiment is identical to the first embodiment except for the insulating film, and therefore only the insulating film will hereinafter be described.

In the fourth embodiment of the present invention, a blocking band is further formed on each of a negative electrode non-overlap portion 412 and a positive electrode non-overlap portion 422.

Specifically, the negative electrode non-overlap portion 412 is provided with a first blocking band 412d formed along an edge in a direction orthogonal to a negative electrode lead 310, and the positive electrode non-overlap portion 422 is provided with a second blocking band 422d formed along an edge in a direction orthogonal to a positive electrode lead 320.

When the first blocking band 412d is provided at the negative electrode non-overlap portion 412 and the second blocking band 422d is provided at the positive electrode non-overlap portion 422, as described above, a step is formed, which may contribute to preventing condensation from flowing to the negative electrode lead 310 and the positive electrode lead 320.

Although the case in which a blocking band is formed on a non-overlap portion having a single flow channel has been described in the fourth embodiment, a blocking band may also be formed on a non-overlap portion having two or more flow channels, as in the second embodiment.

FIG. 11 is a perspective view of a battery module in which a battery cell according to the present invention is received. As shown in FIG. 11, the battery module 2000 is configured such that a plurality of battery cells 1000 is received in a module case 2100 having a receiving space.

In this case, each battery cell 1000 is a battery cell having at least one of a flow channel, a water-repellent coating layer, and a blocking band provided at an insulating film, as described in the first to fourth embodiments, and the battery cells are received in a state of being erected side by side in a direction perpendicular to a bottom surface of the module case 2100.

Even though condensation is generated due to temperature change or the like, the generated condensation flows downward due to the flow channel, the water-repellent coating layer, or the blocking band provided at the insulating film, whereby it is possible to prevent short circuit due to condensation. Although not shown in the figure, the module case 2100 may be further provided with a passageway configured to discharge the condensation that has flown downwards to the outside.

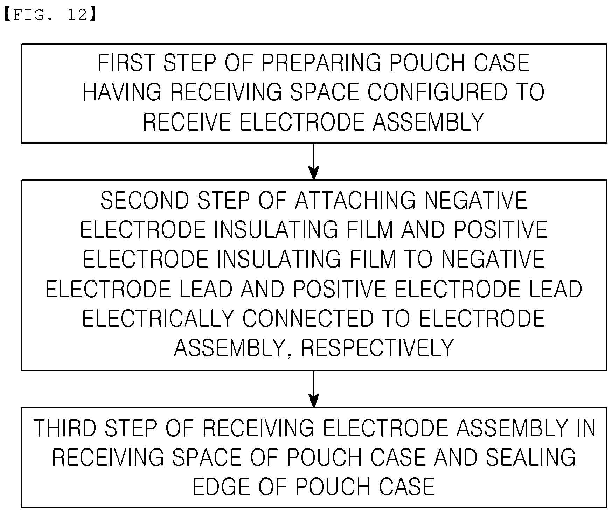

FIG. 12 is a flowchart illustrating a battery cell manufacturing method according to the present invention. The battery cell manufacturing method according to the present invention may comprise a first step of preparing a pouch case having a receiving space configured to receive an electrode assembly, a second step of attaching a negative electrode insulating film and a positive electrode insulating film to a negative electrode lead and a positive electrode lead electrically connected to the electrode assembly, respectively, and a third step of receiving the electrode assembly in the receiving space of the pouch case and sealing an edge of the pouch case.

Meanwhile, before the insulating films are attached to the electrode leads, it is preferable to form in advance at least one of a flow channel, a water-repellent coating layer, and a blocking band at a non-overlap portion of each of a negative electrode insulating film and a positive electrode insulating film, i.e., a part exposed outside a sealed portion of the pouch case, and it is more preferable to form the flow channel, the water-repellent coating layer, and the blocking band in a direction orthogonal to the electrode lead.

The present invention provides a battery pack including the battery module.

Those skilled in the art to which the present invention pertains will appreciate that various applications and modifications are possible within the category of the present invention based on the above description.

### (Description of Reference Symbols)

1000: Battery cell
100: Pouch case
110: Outer resin layer
120: Metal layer
130: Inner resin layer
200: Electrode assembly
210: Negative electrode 211: Negative electrode tab
220: Positive electrode 221: Positive electrode tab
230: Separator
300: Electrode lead
310: Negative electrode lead
320: Positive electrode lead
400: Insulating film
410: Negative electrode insulating film
411: Negative electrode overlap portion
412: Negative electrode non-overlap portion
412a: First flow channel 412b: Second flow channel
412c: First water-repellent coating layer 412d: First blocking band
420: Positive electrode insulating film
421: Positive electrode overlap portion
422: Positive electrode non-overlap portion
422a: Third flow channel 422b: Fourth flow channel
422c: Second water-repellent coating layer 422d: Second blocking band
2000: Battery module
2100: Module case

## Claims

1. A battery cell comprising:
a pouch case made of a laminate sheet, the pouch case having a receiving space;
an electrode assembly received in the pouch case, the electrode assembly comprising a negative electrode having a negative electrode tab, a positive electrode having a positive electrode tab, and a separator interposed between the negative electrode and the positive electrode;
a pair of electrode leads including a negative electrode lead electrically connected to the negative electrode tab and a positive electrode lead electrically connected to the positive electrode tab; and
a pair of insulating films including a negative electrode insulating film interposed between an inner surface of a sealed portion of the pouch case and the negative electrode lead and including a positive electrode insulating film interposed between the inner surface of the sealed portion of the pouch case and the positive electrode lead, wherein
the negative electrode insulating film and/or the positive electrode insulating film has a non-overlap portion exposed outside the sealed portion of the pouch case, and
the non-overlap portion includes a flow channel configured to allow condensation to move therethrough.

2. The battery cell according to claim 1, wherein a negative electrode non-overlap portion of the negative electrode insulating film includes a first flow channel configured to allow condensation to move therethrough in a direction orthogonal to the negative electrode lead, and
a positive electrode non-overlap portion of the positive electrode insulating film includes a third flow channel configured to allow condensation to move therethrough in a direction orthogonal to the positive electrode lead.

3. The battery cell according to claim 2, wherein
each of the first flow channel and the third flow channel has a hemispherical section, and
opposite ends of each of the first flow channel and the third flow channel are open.

4. The battery cell according to claim 2, wherein the negative electrode non-overlap portion further includes a second flow channel parallel to and spaced apart from the first flow channel by a predetermined distance.

5. The battery cell according to claim 4, wherein the first flow channel and the second flow channel have different sectional areas.

6. The battery cell according to claim 2, wherein the positive electrode non-overlap portion further includes a fourth flow channel parallel to and spaced apart from the third flow channel by a predetermined distance.

7. The battery cell according to claim 6, wherein the third flow channel and the fourth flow channel have different sectional areas.

8. The battery cell according to claim 2, wherein
the negative electrode non-overlap portion has a first water-repellent coating layer (412c) formed so as not to overlap the first flow channel, and
the positive electrode non-overlap portion has a second water-repellent coating layer formed so as not to overlap the third flow channel.

9. The battery cell according to claim 8, wherein
the first water-repellent coating layer is positioned along an edge in the direction orthogonal to the negative electrode lead, and
the second water-repellent coating layer is positioned along an edge in the direction orthogonal to the positive electrode lead.

10. The battery cell according to claim 2, wherein the negative electrode non-overlap portion has a first blocking band positioned along an edge in the direction orthogonal to the negative electrode lead.

11. The battery cell according to claim 2, wherein the positive electrode non-overlap portion has a second blocking band positioned along an edge in the direction orthogonal to the positive electrode lead.

12. A battery module comprising the battery cell according to any one of claims 1 to 11.

13. A battery cell manufacturing method comprising:
a first step of preparing a pouch case having a receiving space configured to receive an electrode assembly;
a second step of attaching a negative electrode insulating film and a positive electrode insulating film to a negative electrode lead and a positive electrode lead electrically connected to the electrode assembly, respectively; and
a third step of receiving the electrode assembly in the receiving space of the pouch case and sealing an edge of the pouch case, wherein
the negative electrode insulating film and/or the positive electrode insulating film comprises a non-overlap portion exposed outside a sealed portion of the pouch case,
the negative electrode non-overlap portion of the negative electrode insulating film includes a first flow channel configured to allow condensation to move therethrough in a direction orthogonal to the negative electrode lead, and
the positive electrode non-overlap portion of the positive electrode insulating film includes a third flow channel configured to allow condensation to move therethrough in a direction orthogonal to the positive electrode lead.
